(19) Europäisches Patentamt
European Patent Office
Office européen des brevets

(11) **EP 1 689 624 B1**

(12) **EUROPÄISCHE PATENTSCHRIFT**

(45) Veröffentlichungstag und Bekanntmachung des Hinweises auf die Patenterteilung:
**03.06.2009  Patentblatt 2009/23**

(21) Anmeldenummer: **04762453.1**

(22) Anmeldetag: **22.07.2004**

(51) Int Cl.:
**B60T 8/17** (2006.01)

(86) Internationale Anmeldenummer:
**PCT/DE2004/001603**

(87) Internationale Veröffentlichungsnummer:
**WO 2005/044650 (19.05.2005 Gazette 2005/20)**

(54) **VORRICHTUNG ZUR BESTIMMUNG EINES DREHPUNKTS EINES FAHRZEUGS UM EINE FAHRZEUGHOCHACHSE**

DEVICE FOR DETERMINING THE CENTRE OF ROTATION OF A VEHICLE ABOUT A VEHICLE VERTICAL AXIS

DISPOSITIF DE DETERMINATION D'UN POINT DE ROTATION D'UN VEHICULE AUTOUR D'UN AXE VERTICAL DE VEHICULE

(84) Benannte Vertragsstaaten:
**DE ES FR SE**

(30) Priorität: **31.10.2003  DE 10350920**

(43) Veröffentlichungstag der Anmeldung:
**16.08.2006  Patentblatt 2006/33**

(73) Patentinhaber: **ROBERT BOSCH GMBH**
**70442 Stuttgart (DE)**

(72) Erfinder:
 • LICH, Thomas
  **71409 Schwaikheim (DE)**
 • SCHMID, Michael
  **70806 Kornwestheim (DE)**

(56) Entgegenhaltungen:
**DE-A- 10 015 267     DE-A- 10 017 084**
**DE-C- 19 651 124**

**Beschreibung**

Stand der Technik

Die Erfindung geht aus von einer Vorrichtung zur Bestimmung eines Drehpunkts eines Fahrzeugs um eine Fahrzeughochachse nach der Gattung des unabhängigen Patentanspruchs.

Aus DE 100 15 267 A1 ist eine Steuervorrichtung für Insassenschutzmittel in einem Kraftfahrzeug bekannt. Dabei wird neben einem Längsbeschleunigungssensor die Verwendung von Reifensensoren an den Fahrzeugrädern vorgeschlagen. Die Messdaten der Radlastveränderungen, die diese Reifensensoren erfassen, ermöglichen einer Auswerteeinheit, langsame Kippbewegungen des Fahrzeugs zu errechnen. Mittels der Messdaten eines zusätzlichen Lenkwinkelsensors können auch dynamische Fahrzustandsänderungen erfasst werden. Insassenschutzmittel zum Front- und Seitenaufprallschutz sowie zum Überrollschutz werden je nach erkannter Unfallsituation ausgelöst.

Vorteile der Erfindung

Die erfindungsgemäße Vorrichtung zur Bestimmung eines Drehpunkts eines Fahrzeugs um eine Fahrzeughochachse hat den Vorteil, dass die Vorrichtung die Verschiebung des Drehpunkts ermittelt, so dass fahrdynamische Größen auf den aktuellen korrekten Drehpunkt bezogen werden. Bei Schleuderbewegungen um die Fahrzeughochachse ist zu Beginn der Drehpunkt immer im Bereich der Fahrzeugfront. Im Laufe der Schleuderbewegurig bewegt sich der Drehpunkt auf den Schwerpunkt des Fahrzeugs zu. Diese Drehpunktsverschiebung wird nun vorteilhafter Weise zur korrekten Bestimmung der fahrdynamischen Größen verwendet. Damit lassen sich aktive Regelsysteme wie Fahrdynamikregelungen (ESP) sicherer regeln und es können Personenschutzmittel wie Gurtstraffer oder Airbags wesentlich sicherer und mit einer höheren Zuverlässigkeit aktiviert werden. Insbesondere für die Überrollsensierung, die eine Verknüpfung von aktiver und passiver Sicherheit beinhaltet, ist die erfindungsgemäße Vorrichtung besonders geeignet. Dabei ist es nämlich äußerst wichtig, eine korrekte Erfassung der lateralen Geschwindigkeit im Schwerpunkt des Fahrzeugs bereitzustellen, damit entsprechende Fehl- und/oder Frühauslösungen im Falle eines Überrollvorgangs vermieden werden können. Vorteilhafterweise wird die Drehpunktsverschiebung in Abhängigkeit vom Schwimmwinkel und der Gierrate bestimmt. Der Schwimmwinkel gibt den Winkel zwischen der Fahrzeuglängsachse und dem Geschwindigkeitsvektor an. Die Gierrate ist die Drehung des Fahrzeugs um eine Fahrzeughochachse.

Durch die in den abhängigen Ansprüchen aufgeführten Maßnahmen und Weiterbildungen sind vorteilhafte Verbesserungen der im unabhängigen Patentanspruch angegebenen Vorrichtung zur Bestimmung eines Drehpunkts eines Fahrzeugs in seiner Fahrzeughochachse möglich.

Besonders vorteilhaft ist, dass die Vorrichtung zusätzlich die Änderung des Schwimmwinkels in Abhängigkeit von der Zeit bei der Bestimmung des Drehpunkts berücksichtigt. Eine hohe Schwimmwinkeländerung zeigt ein Ausbrechen des Fahrzeugs an und kann dazu verwendet werden, die Berechnung des Drehpunkts einzuleiten.

Vorteilhafterweise können sowohl die Gierrate als auch der Schwimmwinkel über andere fahrdynamische Größen wie die Fahrzeugquerbeschleunigung oder -geschwindigkeit und die Fahrzeuglängsbeschleunigung und -geschwindigkeit bestimmt werden. Insbesondere der Schwimmwinkel kann äquivalent über fahrdynamische Größen in Fahrzeuglängsrichtung und Fahrzeugquerrichtung bestimmt werden. Es ist also nicht notwendig, die Gierrate und den Schwimmwinkel zu messen.

Weiterhin ist es von Vorteil, dass die Sensorik zur Ermittlung des Schwimmwinkels im Bereich des Fahrzeughecks vorgesehen ist. Alternativ ist es möglich, dass diese Sensorik auch an der Fahrzeugfront angeordnet ist. Vorzugsweise ist diese Sensorik optisch ausgebildet. D. h., dass Messprinzip ist optisch. Beispielhaft kann dafür eine optische Sensorik verwendet werden, die den fahrbaren Untergrund überwacht. Es wird dabei die stochastische Mikrostruktur der Fahrbahnoberfläche auf ein periodisches Prismagitter im Sensor abgebildet. Die temporalen Frequenzen, die sich durch Multiplikation der sich veränderten Mikrostruktur mit der periodischen Struktur des Gitters ergeben, werden über das Sensorfeld integriert, um einen Durchschnittswert zu erhalten. Um die Messgenauigkeit zu maximieren, sollte die Gitterperiode, die typischerweise zwischen 100 und 800 Mikrometer liegt, mit den Ortsfrequenzspektrum der fahrbaren Oberfläche übereinstimmen. Durch eine weitere Signalverarbeitung kann die Geschwindigkeit durch ein Zählen von Signalperioden, die direkt proportional zur Entfernung sind, die das Fahrzeug gefahren ist, ermittelt werden. Insbesondere ist durch eine Segmentierung der Gitterfläche eine Bestimmung der Geschwindigkeiten in zwei Dimensionen möglich. Weitere Möglichkeiten sind die Erkennung der Fahrrichtung und damit des Schwimmwinkels. Es sind jedoch auch andere Messmethoden zur Bestimmung des Schwimmwinkels möglich. Hierzu zählen im Allgemeinen alle Sensorprinzipien, die eine Geschwindigkeits- oder Ortsmessung über Grund durchführen können. Neben optischen Sensoren sind hier ebenfalls radarbasierte- oder Ultraschallsensoren möglich. Eine weitere Messmethode zur Erfassung des Schwimmwinkels kann auch auf einem Ortungssystem wie dem Global Positioning System basieren.

Der Drehpunkt kann mit der Gierrate und dem Schwimmwinkel derart bestimmt werden, dass dazu abgespeicherte Werte für die Gierrate und dem Schwimmwinkel in einer Tabelle vorliegen, um daraus dann den Drehpunkt zu bestimmen. D. h., es werden Versuche mit dem jeweiligen Fahrzeugen vorher durchgeführt, um daraus Werte zu ermitteln, auf die dann zur Bestimmung des aktuellen Drehpunkts zugegriffen werden kann. Alternativ ist es möglich, eine Funktion entweder empirisch oder analytisch zu bestimmen, die den Zusammenhang zwischen Schwimmwinkel und Gierrate sowie dem aktuellen Drehpunkt wiedergibt.

Der aktuelle Drehpunkt ist wie oben dargestellt für die Fahrdynamikregelung von nutzen, da die Fahrdynamikregelung mit dem aktuellen Drehpunkt fahrdynamische Größen, insbesondere die Fahrzeugquergeschwindigkeit genauer bestimmen kann. Damit lassen sich bezogen auf die Fahrzeugregelung genauere Berechnungen über die aktuelle Fahrsituation gewinnen und gewährleisten eine gegenüber dem Stand der Technik sichere Regelung des Fahrzeugs. Auch für einen Personenschutzsystem, das Personenschutzmittel wie Gurtstraffer und Airbags ansteuert ist die Kenntnis des aktuellen Drehpunkts zu einer optimalen Ansteuerung von großem Vorteil, da auch hier fahrdynamische Größen in den Auslösealgorithmus eingehen und diese somit besser bestimmt werden können.

Zeichnung

Ausführungsbeispiele der Erfindung sind in der Zeichnung dargestellt und werden in der nachfolgenden Beschreibung näher erläutert.
Es zeigen

Figur 1 ein Blockschaltbild der erfindungsgemäßen Vorrichtung,
Figur 2 ein Flussdiagramm,
Figur 3 den Schwimmwinkel eines Fahrzeugs,
Figur 4 Schleuderbewegungen eines Fahrzeugs und
Figur 5 die Wanderung des Drehpunkts während der Schleuderbewegung.

Beschreibung

Zahlen aus den USA belegen die Bedeutung der passiven Sicherheit bei einem Fahrzeugüberschlag. Im Jahre 1998 waren die Hälfte aller tödlichen Einzelfahrzeugunfälle auf einen Überschlag zurückzuführen. Im gesamten Unfallgeschehen nimmt der Fahrzeugüberschlag einen Anteil von rund 20% ein. Es ergibt sich jedoch in kritischen Fahrmanövern zwangsläufig aufgrund des Fahrzeugaufbaus folgende Situation: Kommt ein Fahrzeug aufgrund äußerer Umstände ins Schleudern, dann ist der Drehpunkt des Fahrzeugs zu Beginn immer an den Vorderrädern. Je nach Situation kann es aufgrund der Drehrate dazu führen, dass das Fahrzeug sich komplett über die Vorderräder drehen kann oder aber der Drehpunkt wandert. In der Regel wandert der Drehpunkt in Richtung Fahrzeugschwerpunkt, d. h., das Fahrzeug rotiert um den Schwerpunkt. Es besteht jedoch auch die Möglichkeit, dass der Drehpunkt sich sogar in Richtung der Hinterachse verlagert. Erfindungsgemäß wird daher vorgeschlagen, die Drehpunktverschiebung zu bestimmen, so dass diese Drehpunktverschiebung für die Bestimmung von fahrdynamischen Größen berücksichtigt werden kann. Folglich ist die korrekte Abbildung fahrdynamischer Größen z. B. den Schwimmwinkel auf einen beliebigen in der Fahrzeuggeometrie befindlichen Punkt, z. B. den Fahrzeugschwerpunkt in Abhängigkeit des sich über die Zeit veränderlichen Drehpunkts möglich. Vor allem gilt dies bei der Verwendung von Sensoren zur Bestimmung der Schwimmwinkel unter Transformation der gemessenen Größen auf ein in der Fahrzeuggeometrie befindlichen Referenzpunkt z. B. den Fahrzeugschwerpunkt. Daraus ergibt sich der Vorteil, dass eine korrekte Berechnung der fahrdynamischen Größen bezogen auf den Referenzpunkt also den Fahrzeugschwerpunkt erfolgen kann. Dies hat zur Folge, dass eventuell Personenschutzmittel wie Gurtstraffer oder aber Kopfairbags wesentlich sicherer und mit höherer Zuverlässigkeit aktiviert werden können. Weiterhin ist dies relevant für eine Überrollsensierung, die eine Verknüpfung von aktiver und passiver Sicherheit beinhaltet. Hierzu ist es sehr wichtig, eine korrekte Erfassung der lateralen Geschwindigkeit im Schwerpunkt zu haben, damit entsprechende Fehl- und Frühauslösungen vermieden werden können.
Ein weiterer Vorteil ergibt sich bei einer Fahrdynamik gestützten Regelung des Schwimmwinkels. Da hier eine gezielte Transformation auf die Achsen des Fahrzeugs notwendig ist, kann eine bessere Abschätzung der Regelgrößen durchgeführt und die Stabilität des Fahrzeugs erhöht werden.

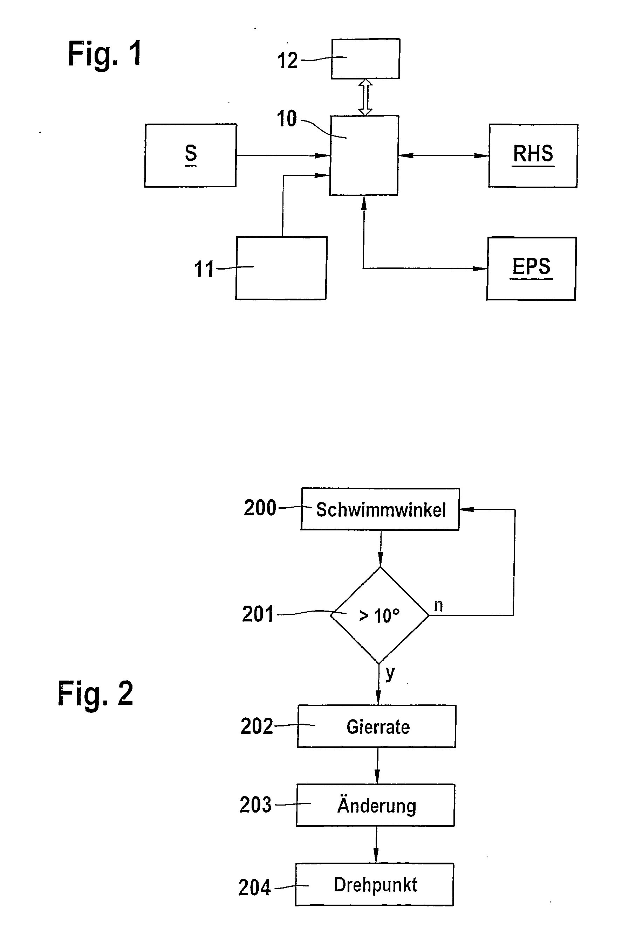

Figur 1 zeigt in einem Blockschaltbild die erfindungsgemäße Vorrichtung. Ein Schwimmwinkelsensor S ist an einen ersten Dateneingang eines Prozessors 10 angeschlossen. Dieser Prozessor 10 kann ein Mikroprozessor oder Mikrocontroller sein. Insbesondere kann der Prozessor 10 in einem Steuergerät untergebracht sein, beispielsweise in einem Steuergerät für eine Fahrdynamikregelung oder für einen Personenschutzsystem. An einen zweiten Dateneingang des Prozessors 10 ist ein Gierratensensor 11 angeschlossen. Über einen ersten Datenein-/ausgang ist der Prozessor 10 mit einem Speicher 12 verbunden. Im Speicher 12 können dauerhaft Daten abgespeichert werden. Es ist möglich, dass der Speicher 12 auch einen flüchtigen Speicherbereich aufweist. Über einen zweiten Datenein-/ausgang ist der Prozessor 10 mit einem Personenschutzsystem RHS gekoppelt. Damit ist es möglich, den aktuellen Drehpunkt dem Personenschutzsystem RHS zu übermitteln, so dass in Abhängigkeit davon Personenschutzmittel wie Airbag oder Gurtstraffer oder Überrollbügel aktiviert werden können. Auch eine Fahrdynamikregelung ESP ist über einen dritten Dateneingang mit dem Prozessor 10 verbunden, um den aktuellen Drehpunkt zu erhalten. Auch für die Stabilisierung des Fahrzeugs für das die Fahrdynamikregelung verantwortlich ist, ist die Kenntnis des aktuellen Drehpunkts von großem Vorteil.

Aus dem aktuellen Schwimmwinkel und der Gierrate bestimmt der Prozessor 10 unter Verwendung einer Tabelle, die im Speicher 12 abgelegt ist, den aktuellen Drehpunkt.

Für die Schwimmwinkeländerung $\dot{\beta}$ gilt folgende Gleichung:

$$\dot{\beta} = \omega_z - \frac{a_y}{v_x} * \cos^2(\beta) - \frac{a_x}{v_x} * \sin(\beta) * \cos(\beta)$$

Daraus kann man durch Integration den Schwimmwinkel berechnen:

$$\beta = \beta_0 + \int \dot{\beta} \; dt$$

Hier bezeichnen die Größen $\omega_z$ die Gierrate, $a_y$ die laterale Beschleunigung, $a_x$ die longitudinale Bescheunigung, $v_x$ die Geschwindigkeit in longitudinaler Richtung und $\beta$ den Schwimmwinkel. In normalen Fahrsituationen ist der Schwimmwinkel im Bereich von 4˚ bis 8˚ und stellt eine unkritische Größe für die Algorithmen der Rückhaltesysteme dar. In diesem Bereich regelt auch die Fahrdynamikregelung ESP, so dass Gefahrensituationen erkannt und in entsprechenden Situationen, in denen das Fahrzeug auszubrechen droht, durch präzises Bremsen einzelner Räder das Fahrzeug stabilisiert wird. In den Situationen, in denen die Fahrdynamikregelung ESP nicht mehr regeln kann, das Fahrzeug also definitiv ausbricht, kommt es zu Schwimmwinkeln größer als 10˚ und dann zu einer Rotation des Fahrzeugs um seine Hochachse mit oder ohne einer translatorischen Bewegung des Fahrzeugs.

Zur Bestimmung des variablen Drehpunkts kann ein Algorithmus ähnlicher Art verwendet werden, der aufgrund des Schwimmwinkelaufbaus, der Schwimmwinkeländerung aktiv geschaltet wird. Da in der Regel im Frontbereich die Rotation greift, kann über den Schwimmwinkel sowie die Gierrate eine Funktion erstellt werden, dass beispielsweise ab einem Schwimmwinkel von z. B. 25˚ und einer Gierrate von 50˚ pro Sekunde der Schwerpunkt der Drehung sich zum Fahrzeugschwerpunkt verlagert. Bei steigendem Schwimmwinkel und Gierrate ergibt sich zwangsläufig die Rotation des Fahrzeugs, um den Fahrzeugschwerpunkt. Damit lässt sich also die Drehpunktsänderung als Funktion von Schwimmwinkel, Gierrate und gegebenenfalls der Schwimmwinkeländerung beschreiben.

Zur Bestimmung der Drehpunktsänderung kann ein einfaches Look-Up-Table verwendet werden, das zunächst einen linearen Zusammenhang zwischen dem Abstand vom Fahrzeugschwerpunkt zum Drehpunkt in Abhängigkeit von der Gierrate beschreibt, nachdem ein Ausbrechvorgang erfasst wurde. D. h., der Schwimmwinkel dient als Bedingung zur Erkennung des Ausbrechvorgangs, während die Gierrate dann zur Bestimmung des aktuellen Drehpunkts verwendet wird. Folgende Tabelle gibt ein Beispiel für eine Gierrate und den Abstand des Sensors zur Ermittlung des Schwimmwinkels zum Drehpunkt. Dieser Abstand und der Abstand des Sensors zum Schwerpunkt ergibt den Abstand des aktuellen Drehpunkts vom Schwerpunkt.

| Gierrate wz [˚/s] | ->Abstand Sensor zum Drehpunkt $\ell_{Sensor, Drehpunkt}$ |
|---|---|
| 10 | Maximal -> Sensorposition zum Frontbereich z.B. Rechts oder Links je nach Ausbrechrichtung z.B. 7m |
| 20 | 4.8m |
| 30 | 4.5m |
| 40 | 4m |
| 50 | 3.8m |
| 60 | 3.54m |
| 70 | 3.25m |

(fortgesetzt)

| Gierrate wz [˚/s] | ->Abstand Sensor zum Drehpunkt $\ell_{Sensor,Drehpunkt}$ |
|---|---|
| 80 | 3m |
| >=90 | Abstand Sensor zum Fzg.schwerpunkt - dies ist bekannt. z.B. 2.95, |

Figur 2 erläutert in einem Flussdiagramm den Ablauf, den die Vorrichtung erfindungsgemäß vollführt. Im Verfahrensschritt 200 wird der Schwimmwinkel mit dem Sensor S ermittelt. Im Verfahrensschritt 201 wird überprüft, ob dieser Schwimmwinkel über einer bestimmten Grenze liegt, hier wird als Grenze 10˚ genommen. Es ist jedoch auch möglich, 8˚ zu verwenden oder einen ähnlichen Wert. Liegt der Schwimmwinkel unter diesem Wert, dann wird von keinem Schleudervorgang ausgegangen und es wird zurück zu Verfahrensschritt 200 gesprungen. Liegt jedoch der Schwimmwinkel über 10˚, dann wird zu Verfahrensschritt 202 gesprungen, um die Gierrate zu verwenden, wie oben, dargestellt um den aktuellen Drehpunkt zu bestimmen. Dazu wird in Verfahrensschritt 203 mit der oben genannten Tabelle oder einer Gleichung die Drehpunktsänderung bestimmt, um dann den entsprechenden Wert, beispielsweise den Abstandsschwerpunkt zu Drehpunkt zu bestimmen, um die Transformation von fahrdynamischen Größen optimal durchführen zu können. In Verfahrensschritt 204 wird der Drehpunkt dadurch bestimmt, dass der Anfangsdrehpunkt, der an der im Frontbereich des Fahrzeugs angenommen wird und die Drehpunktsänderung miteinander verknüpft werden, um den aktuellen Drehpunkt festzulegen.

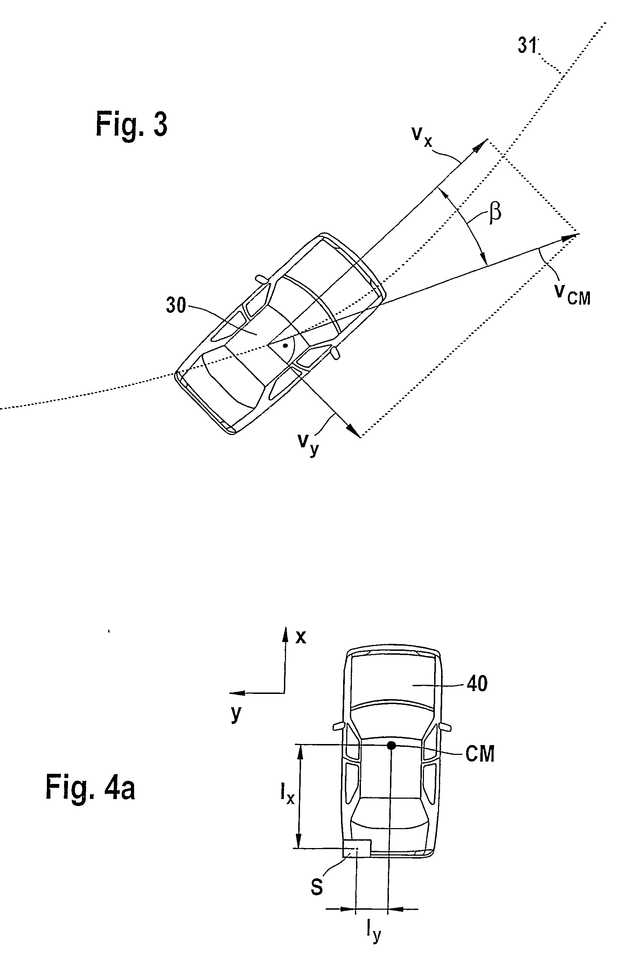

Figur 3 zeigt die grundliegenden fahrdynamischen Größen die hier zu berücksichtigen sind. Das Fahrzeug 30 bewegt sich entlang einer Trajektorie 31. Das Fahrzeug 30 weist einen Geschwindigkeitsanteil $v_x$ in Fahrzeuglängsrichtung und einen Geschwindigkeitsanteil $v_y$ in Fahrzeugquerrichtung auf. Diese beiden Größen ergeben einen Vektor $v_{CM}$, der die Tangente an die Trajektorie 31 beschreibt. Zwischen dem Vektor $v_{CM}$ und $v_x$ liegt der Winkel β. Dieser Winkel ist der Schwimmwinkel.

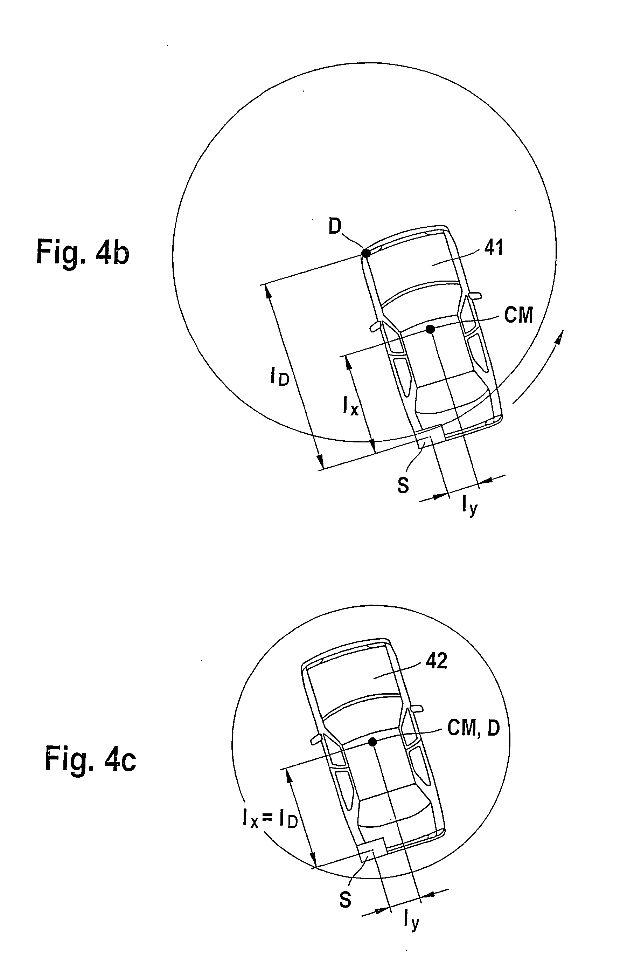

Figur 4 beschreibt die Anfangssituation und die Endsituation bei der Schleuderbewegung. In Figur 4a ist ein Fahrzeug 40 mit einem Schwerpunkt CM und einem Sensor S zur Ermittlung des Schwimmwinkels versehen, wobei der Sensor S im Fahrzeugheck beispielsweise an der Heckstoßstange angeordnet ist. Der Abstand des Sensors S zum Schwerpunkt CM wird durch die Größen $1_x$ in Fahrzeuglängsrichtung und $1_y$ in Fahrzeugquerrichtung angegeben. Figur 4b zeigt nun die Drehung des Fahrzeugs um die Vorderachse. Der Drehpunkt D ist an der Fahrzeugfront des Fahrzeugs 41 angegeben. Der Schwerpunkt CM ist natürlich konstant wie auch der Einbauort des Sensors S. Der Sensor S hat zum Drehpunkt D bezogen auf die logitudinale Richtung hier den Abstand $1_d$. Der Drehpunkt D wandert jedoch während der Schleuderbewegung, so dass in Figur 4c der Endzustand dargestellt ist, wo der Drehpunkt D mit dem Schwerpunkt CM übereinstimmt. Der Sensor S hat damit zum Schwerpunkt CM bzw. Drehpunkt D in logitudinaler Richtung den gleichen Abstand, d.h. $1_x=1_d$.

Der Sensor S befindet sich am Heck des Fahrzeugs und misst beispielsweise die longitudinale Geschwindigkeit $v_{x,Sensor}$ und die laterale Geschwindigkeit $v_{y,Sensor}$. Der Sensor hat den Abstand $l_{Sensor,VA} = \sqrt{l_{x,Sensor,VA}^2 + l_{y,Sensor,VA}^2}$ zur Vorderachse und den Abstand $l_{Sensor,CM} = \sqrt{l_{x,Sensor,CM}^2 + l_{y,Sensor,CM}^2}$ zum Schwerpunkt.

Daraus resultiert die Geschwindigkeit $v_{CM}$ des Schwerpunkts unter Berücksichtigung der Position vom Sensor aus:

$$v_{CM} = v_{Sensor} + \omega_z \cdot l_{Sensor,CM}$$

Die wesentliche Annahme hierbei ist, dass die Rotation um den Schwerpunkt stattfindet. Dies trifft zu Beginn eines Schleudervorgangs nicht zu und muss während des Schleuderns nicht notwendigerweise zutreffen. Vielmehr ergibt sich eine gewisse Abhängigkeit von der jeweiligen Gierrate, ob die Rotationsenergie ausreicht, um das Fahrzeug zum Drehen zu bringen oder nicht. Dies bedeutet, dass die Geschwindigkeit die oben abgeleitet wurde, durch die der rotatorischen Anteil verfälscht wird, da der Abstand des Drehpunkts zum Sensor eine zeitabhängige Größe darstellt:

$$v_{CM} = v_{Sensor} + \omega_z \cdot l_{Sensor,Drehpunkt}(t, \omega_z)$$

Zu Beginn des Schleuderns ergibt sich grundsätzlich als Abstand die Differenz vom Sensor zur Vorderachse, da eine Rotation des Fahrzeugs immer um die Vorderräder eingeleitet werden kann. Je nach Untergrund, Gierrate u.s.w. besteht die Möglichkeit, dass das Fahrzeug um die Vorderräder gedreht oder aber der Drehpunkt von der Vorderachse zum Schwerpunkt verlagert wird. Trifft dieser Fall ein, dann rotiert das Fahrzeug um den Schwerpunkt und obiger Ausgangsformel trifft wieder zu.

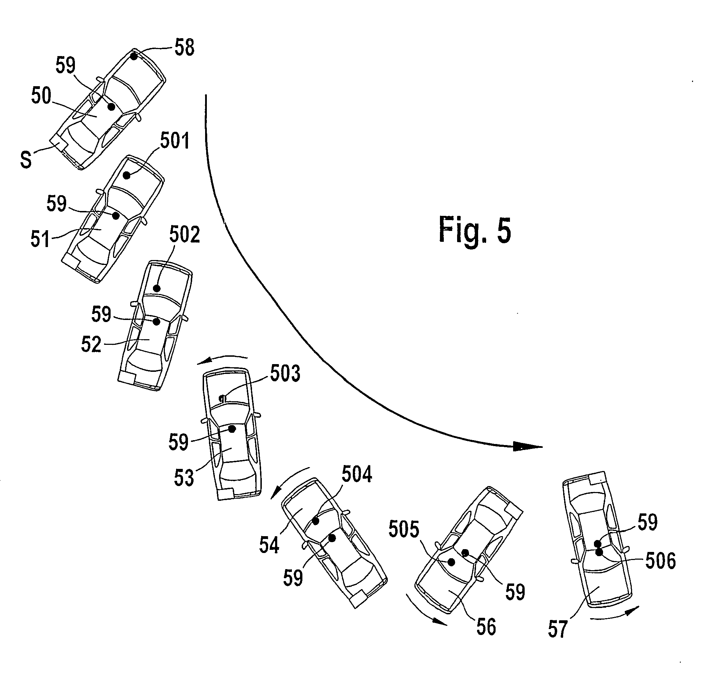

Figur 5 erläutert in einer Art Zeitrafferdiagramm die Wanderung des Drehpunkts. Zu Beginn ist das Fahrzeug in der Position 50 mit dem Schwerpunkt 59 und den Drehpunkt 58 und dem Sensor S. Der Abstand zum Sensor ist hier maximal. Im nächsten Schritt hat sich der Drehpunkt zum Punkt 501 bewegt, so dass nun das Fahrzeug 51 sich um den Drehpunkt 501 dreht. Im Bild 52 hat sich der Drehpunkt zur Position 502 bewegt und ist nun dem Schwerpunkt 59 weiter nähergerückt. Im Bild 53 hat sich der Drehpunkt wiederum etwas weiterbewegt, wie auch in Bild 54, wo der Drehpunkt 504 bereits im Bereich der Windschutzscheibe ist. Im Bild 56 nähert sich der Drehpunkt 505 weiter dem Schwerpunkt 59, wobei im Bild 57 dann der Drehpunkt 506 den Schwerpunkt 59 erreicht hat. Bei einer steigenden Gierrate und Schwimmwinkel wandert der Drehpunkt in Richtung zum Fahrzeugschwerpunkt.

## Patentansprüche

1. Vorrichtung zur Bestimmung eines Drehpunkts (D) eines Fahrzeugs (30) um eine Fahrzeughochachse, **dadurch gekennzeichnet, dass** die Vorrichtung derart konfiguriert ist, dass die Vorrichtung den Drehpunkt (D) in Abhängigkeit von einer Gierrate und einem Schwimmwinkel ($\beta$) bestimmt, dass die Vorrichtung einen Speicher (12) aufweist, in dem Daten zu der Gierrate und dem Schwimmwinkel ($\beta$) abgelegt sind, wobei die Vorrichtung in Abhängigkeit von den Daten den Drehpunkt (D) bestimmt.

2. Vorrichtung nach Anspruch 1, **dadurch gekennzeichnet, dass** die Vorrichtung zur Bestimmung des Drehpunkts (D) zusätzlich eine Schwimmwinkeländerung ($\beta$) und/oder die laterale Geschwindigkeit ($v_y$) berücksichtigt.

3. Vorrichtung nach Anspruch 1, **dadurch gekennzeichnet, dass** die Vorrichtung die Gierrate in Abhängigkeit von linearen fahrdynamischen Größen bestimmt.

4. Vorrichtung nach Anspruch 1 oder 3, **dadurch gekennzeichnet, dass** die Vorrichtung den Schwimmwinkel in Abhängigkeit der linearen fahrdynamischen Größen bestimmt.

5. Vorrichtung nach Anspruch 1 oder 2, **dadurch gekennzeichnet, dass** zur Ermittlung des Schwimmwinkels ($\beta$) eine Sensorik (S) im Bereich des Fahrzeughecks vorgesehen ist.

6. Vorrichtung nach Anspruch 5, **dadurch gekennzeichnet, dass** die Sensorik (S) optisch und/oder ultraschallbasiert und/oder radarbasiert und/oder ortungsbasiert ausgebildet ist.

7. Vorrichtung nach einem der vorherigen Ansprüche, **dadurch gekennzeichnet, dass** die Vorrichtung mit einer Fahrdynamikregelung (ESP) derart gekoppelt ist, dass die Fahrdynamikregelung (ESP) bei der Bestimmung fahrdynamischer Größen den Drehpunkt berücksichtigt.

8. Vorrichtung nach einem der vorherigen Ansprüche, **dadurch gekennzeichnet, dass** die Vorrichtung mit einem Personenschutzsystem (RHS) derart gekoppelt ist, dass das Personenschutzsystem (RHS) den Drehpunkt (D) bei einer Ansteuerung von Personenschutzmitteln berücksichtigt.

## Claims

1. Device for determining a centre of rotation (D) of a vehicle (30) about a vehicle vertical axis, **characterized in that** the device is configured in such a way that the device determines the centre of rotation (D) as a function of a yaw rate and an attitude angle ($\beta$), **in that** the device has a memory (12) in which data relating to the yaw rate and the attitude angle ($\beta$) are stored, wherein the device determines the centre of rotation (D) as a function of the data.

**2.** Device according to Claim 1, **characterized in that** the device for determining the centre of rotation (D) additionally takes into account a change in the attitude angle ($\beta$) and/or the lateral velocity ($v_y$).

**3.** Device according to Claim 1, **characterized in that** the device determines the yaw rate as a function of linear vehicle movement dynamics variables.

**4.** Device according to Claim 1 or 3, **characterized in that** the device determines the attitude angle as a function of the linear vehicle movement dynamics variables.

**5.** Device according to Claim 1 or 2, **characterized in that** a sensor system (S) is provided in the region of the rear part of the vehicle in order to acquire the attitude angle ($\beta$).

**6.** Device according to Claim 5, **characterized in that** the sensor system (S) is of optical design and/or of an ultrasonic-based design and/or radar-based design and/or locating-system-based design.

**7.** Device according to one of the preceding claims, **characterized in that** the device is coupled to a vehicle movement dynamics control system (ESP) in such a way that the vehicle movement dynamics control system (ESP) takes into account the centre of rotation when vehicle movement dynamics variables are determined.

**8.** Device according to one of the preceding claims, **characterized in that** the device is coupled to a personal protection system (RHS) in such a way that the personal protection system (RHS) takes into account the centre of rotation (D) in an actuation of personal protection means.

**Revendications**

**1.** Dispositif pour déterminer le point de rotation (D) d'un véhicule (30) autour d'un axe de hauteur du véhicule, **caractérisé en ce que** le dispositif est configuré de telle sorte que le dispositif détermine le point de rotation (D) en fonction d'un taux de lacet et d'un angle de flottement ($\beta$), et **en ce que** le dispositif présente une mémoire (12) dans laquelle sont stockées des données relatives au taux de lacet et à l'angle de flottement ($\beta$) , le dispositif déterminant le point de rotation (D) en fonction des données.

**2.** Dispositif selon la revendication 1,
**caractérisé en ce que** le dispositif tient en plus compte d'une modification de l'angle de flottement ($\beta$) et/ou de la vitesse latérale ($v_y$) pour déterminer le point de rotation (D).

**3.** Dispositif selon la revendication 1,
**caractérisé en ce que** le dispositif détermine le taux de lacet en fonction de grandeurs dynamiques de conduite linéaires.

**4.** Dispositif selon la revendication 1 ou 3,
**caractérisé en ce que** le dispositif détermine l'angle de flottement en fonction des grandeurs dynamiques de conduite linéaires.

**5.** Dispositif selon la revendication 1 ou 2,
**caractérisé en ce qu'**un dispositif de détection (S) est prévu dans la zone de l'arrière du véhicule pour déterminer l'angle de flottement ($\beta$).

**6.** Dispositif selon la revendication 5,
**caractérisé en ce que** le dispositif de détection (S) est réalisé sous forme optique et/ou à base d'ultrasons et/ou à base de radar et/ou à base de localisation.

**7.** Dispositif selon l'une des revendications précédentes, **caractérisé en ce que** le dispositif est connecté à un contrôleur dynamique de trajectoire (ESP) de telle sorte que le contrôleur dynamique de trajectoire (ESP) tient compte du point de rotation lors de la détermination des grandeurs dynamiques de conduite.

**8.** Dispositif selon l'une des revendications précédentes, **caractérisé en ce que** le dispositif est connecté avec un système de protection des personnes (RHS) de telle sorte que le système de protection des personnes (RHS) tient compte du point de rotation (D) lors d'une commande des moyens de protection des personnes.

# Fig. 1

12 —

10 —

S

RHS

11 —

EPS

# Fig. 2

200 — Schwimmwinkel

201 — > 10°    n

y

202 — Gierrate

203 — Änderung

204 — Drehpunkt

# Fig. 3

# Fig. 4a

EP 1 689 624 B1

Fig. 4b

Fig. 4c

11

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10015267 A1